# EUROPÄISCHE PATENTSCHRIFT

(11) **EP 1 646 902 B1**
(45) Veröffentlichungstag und Bekanntmachung des Hinweises auf die Patenterteilung: **10.12.2008**
(21) Anmeldenummer: 04741098.0
(22) Anmeldetag: 16.07.2004
(51) Int. Cl.: G02B 21/33

(54) **VORRICHTUNG UND VERFAHREN ZUR UNTERSUCHUNG CHEMISCHER UND/ ODER BIOLOGISCHER PROBEN SOWIE OBJEKTIVAUFSATZ**
DEVICE AND METHOD FOR EXAMINING CHEMICAL AND/OR BIOLOGICAL SAMPLES AND LENS CAP
DISPOSITIF ET PROCEDE POUR L'EXAMEN D'ECHANTILLONS CHIMIQUES ET/OU BIOLOGIQUES, ET COIFFE D'OBJECTIF

(30) Priorität: 23.07.2003 DE 10333326
(43) Veröffentlichungstag der Anmeldung: 19.04.2006
(73) Patentinhaber: Evotec Technologies GmbH, 40225 Düsseldorf (DE)
(72) Erfinder: PIRSCH, Matthias, 22299 Hamburg (DE)
(74) Vertreter: von Kirschbaum, Alexander
(86) Internationale Anmeldenummer: PCT/EP2004/007971
(87) Internationale Veröffentlichungsnummer: WO 2005/010591

(56) Entgegenhaltungen:
- WO-A-99/49504
- DE-A- 10 123 027
- US-A- 3 202 049
- US-A- 3 837 731

## Beschreibung

Die Erfindung betrifft eine Vorrichtung und ein Verfahren zur Untersuchung chemischer und/ oder biologischer Proben mit Hilfe optischer Einrichtungen sowie einen Objektivaufsatz für die dabei verwendete optische Einrichtung. Bei der optischen Einrichtung kann es sich beispielsweise um ein Mikroskop, insbesondere um ein inverses konfokales Mikroskop, handeln.

Derartige Untersuchungsvorrichtungen weisen ein Objektiv zur Beobachtung der Probe auf. Wird mit Hilfe des Objektivs beispielsweise eine in einem Probenträger vorhandene Probe von unten durch einen für die entsprechende Beobachtungsstrahlung durchlässigen Probenträgerboden betrachtet, so wirkt sich die gegebene Konstellation der Brechungsindizes insbesondere bei hoch numerischen Objektiven ungünstig auf den Verlauf des Strahlengangs aus. Unterschiedliche Brechungsindizes treten bei den Übergängen zwischen der Austrittslinse des Objektivs und der Umgebungsluft sowie zwischen dem Boden des Probenträgers und dem zwischen Objektiv und Probenträgerboden angeordneten Medium auf.

Insbesondere bei konfokalen Mikroskopen, die im Hochdurchsatzscreening eingesetzt werden, muss ein sehr kleiner Fokus bestehen. Dies ist erforderlich, da im Hochdurchsatzscreening Proben mit geringen Volumina im µl-bereich untersucht werden. Da die von dem Objektiv erfasste Menge der von der Probe abgegebenen Strahlung (Einsammeleffizienz) großen Einfluss auf die Messzeit hat, muss die Apertur des Objektivs möglichst hoch sein. Dies ist insbesondere beim Hochdurchsatzscreening wichtig, da die Messzeit einer der entscheidenden Parameter darstellt.

Üblicherweise wird eine Immersionsflüssigkeit mit einem Brechungsindex >1 auf die Austrittslinse des Objektivs aufgebracht. Eine derartige Untersuchungsvorrichtung, bei der die Zufuhr der Immersionsflüssigkeit automatisch erfolgt, ist aus WO 02/093232 bekannt. Das Objektiv der Vorrichtung ist dabei in einem derart geringen Abstand zu einem Probenträger angeordnet, dass die auf das Objektiv aufgebrachte Immersionsflüssigkeit auf Grund von Kapillarkräften in einem zwischen dem Objektiv und einer Außenfläche einer Probenträgerwand gebildeten Spalt gehalten wird. Die Zufuhr der Immersionsflüssigkeit kann alternativ auch dadurch erfolgen, dass das Objektiv vertikal und/oder horizontal verfahren wird, um ohne an den Probenträger zu stoßen beispielsweise mit einer Pipette ein Immersionsmedium, wie z.B. destilliertes Wasser, auf das Objektiv aufzubringen. Das Objektiv der beschriebenen Vorrichtung ist von einer Auffangeinrichtung zur Aufnahme überschüssigen Immersionsmediums umgeben. Dadurch soll das Objektiv vor Verschmutzung durch am Glasboden haftende Partikel geschützt werden.

Nachteilig bei einer derartigen Untersuchungsvorrichtung ist, dass die Auffangeinrichtung platzbedingt nur sehr klein ausgestaltet werden kann. Dies führt zu Schwierigkeiten bei der Abfuhr des in die Auffangeinrichtung eingelaufenen Immersionsmediums. Das überschüssige Immersionsmedium bildet in der Auffangeinrichtung in der Regel einzelne Tropfen, die sich nur sehr schwer aus der Auffangeinrichtung über eine einzelne Absaugöffnung absaugen lassen. Mit der Zeit werden die Tropfen immer größer, so dass die Gefahr besteht, dass ein Tropfen so groß wird, dass Immersionsmedium über den Rand der Auffangeinrichtung hinausfließt. Insbesondere, wenn der Probenträger hohen Beschleunigungskräften ausgesetzt ist, wie dies insbesondere zur Messzeitreduktion im Hochdurchsatzscreening der Fall ist, besteht die Gefahr, dass einzelne Tropfen aus Immersionsmedium am Deckglas haften bleiben und später herunterfallen.

Ferner ist aus US 3,837,731 eine Zuführvorrichtung zum Zuführen von Immersionsflüssigkeit zwischen einer Austrittslinse eines Mikroskopobjektivs und einem Mikroskopobjektträger bekannt. Hierbei ist das Objektiv oberhalb des Objektträgers angeordnet und weist ein das Objektiv umgebendes Gehäuse auf, dem über einen Kanal Immersionsmedium zugeführt werden kann, das sodann aus auf der Unterseite des Gehäuses vorgesehenen Schlitzen in Richtung des Objektträgers austritt.

Der Erfindung liegt die Aufgabe zu Grunde, einen Objektivaufsatz und ein Verfahren zur Untersuchung chemischer und/ oder biologischer Proben zu schaffen, welcher/welches ein sicheres, automatisiertes Zuführen und Abführen von Immersionsflüssigkeit erlaubt.

Die Aufgabe wird erfindungsgemäß gelöst durch einen Objektivaufsatz mit den Merkmalen des Anspruchs 1 bzw., ein Verfahren mit den Merkmalen des Anspruchs 9.

Eine Vorrichtung zur Untersuchung chemischer und/ oder biologischer Proben weist zunächst einen Probenträger zur Aufnahme der zu untersuchenden Proben auf. Dem Probenträger gegenüberliegend angeordnet ist ein Objektiv, das insbesondere Teil eines inversen Mikroskops ist. Zur Beobachtung der Proben weist der Probenträger eine für die entsprechende Wellenlänge transparente Probenträgerwand auf. Einer Außenfläche der Probenträgerwand gegenüberliegend ist eine Austrittslinse des Objektivs angeordnet, so dass die Probe durch die Probenträgerwand hindurch untersucht werden kann. Zwischen der Austrittslinse des Objektivs und der Außenfläche der Probenträgerwand ist ein Spalt ausgebildet entsprechend der Gegenstandsbrennweite des Objektivs. Der Spalt weist eine derartige Breite auf, dass in ihm ein Film aus einem Immersionsmedium angeordnet werden kann, so dass der Film sowohl mit der Außenfläche der Probenträgerwand als auch mit der Austrittslinse oder dem Austrittsfenster des Objektivs in Kontakt ist. Hierzu weist der Spalt vorzugsweise einen Abstand von weniger als 1000 µm, insbesondere weniger als 500 µm, und besonders bevorzugt weniger als 200 µm auf.

Die Austrittslinse oder das Austrittsfenster ist erfindungsgemäß von einer Schutzeinrichtung wie einem Objektivaufsatz umgeben, die das Objektiv vor Verschmutzung durch das Immersionsmedium schützt. Die Schutzeinrichtung ist zur Abfuhr des Immersionsmediums mit einer Absaugeinrichtung verbunden. Erfindungsgemäß weist die Schutzeinrichtung einen mit der Absaugeinrichtung verbundenen Kapillarkanal zum Abführen des Immersionsmediums auf, d.h., dass über den Kapillarkanal das Immersionsmedium zumindest teilweise mit Hilfe von Kapillarkräften abgeführt wird.

Auf Grund der in dem Kapillarkanal herrschenden Kapillarkräfte wird ein Teil des Immersionsmediums, das beispielsweise als Tropfen vorliegt, in den Kapillarkanal hineingesaugt. Dadurch wird ein Tropfen aus dem Immersionsmedium sozusagen punktiert bzw. aufgestochen, so dass der Immersionsmediumstropfen in den Kapillarkanal hinein ausläuft. Das Risiko, dass ein Tropfen immer größer wird und an der Schutzeinrichtung vorbei das Objektiv verschmutzt, ist dadurch unterbunden. Somit ist ein sicheres Zuführen und Abführen von Immersionsmedium gewährleistet.

Die Schutzeinrichtung weist beispielsweise mehrere Kapillarkanäle mit Eingangsöffnungen auf, die ringförmig um die Austrittslinse herum angeordnet sind. Die Eingangsöffnungen weisen eine Querschnittsfläche von vorzugsweise <1 mm², insbesondere <0,8 mm² auf. Zur vereinfachten Herstellbarkeit ist der Kapillarkanal alternativ im Wesentlichen als Ringspalt um die Austrittslinse herum ausgestaltet, d.h. das die einzelnen Eingangsöffnungen sozusagen zu einem einzigen Spalt verbunden sind. Die Spaltbreite des Ringspalts beträgt insbesondere weniger als 500 µm.

Die Schutzeinrichtung weist mindestens zwei um das Objektiv herum angeordnete Kragenteile auf, die den Kapillarkanal ausbilden. Das bedeutet, dass die Kragenteile einen Teilbereich aufweisen, in dem sie derart beabstandet sind, dass dadurch der Kapillarkanal ausgebildet wird. Hierdurch kann die Herstellung des Kapillarkanals vereinfacht werden. Ferner kann die Montage der Schutzeinrichtung vereinfacht werden, da es möglich ist, die Kragenteile zwiebelartig bzw. schichtartig übereinander anzuordnen. Wenn mehrere Kragenteile übereinander angeordnet werden, können besonders einfach mehrere Kapillarkanäle ausgebildet werden. Beispielsweise wird ein Kapillarkanal zur Abfuhr und ein Kapillarkanal zur Zufuhr von Immersionsmedium verwendet. Zufuhr und Abfuhr werden somit in separaten Kapillarringen realisiert.

Die Schutzeinrichtung weist vorzugsweise ein Überlaufbecken zur zusätzlichen Aufnahme des Immersionsmediums auf. Dadurch wird eine Verschmutzung des Objektivs durch Immersionsmedium vermieden, für den Fall, dass nach der Untersuchung eines Probenträgers das Objektiv von dem Probenträger weggefahren wird und somit plötzlich ein Großteil des in dem Spalt zwischen Austrittslinse und Probenträgerwand angeordneten Film aus Immersionsmedium abfließt. Insbesondere, damit auf eine zusätzliche Absaugeinrichtung verzichtet werden kann, ist der Kapillarkanal mit dem Überlaufbecken verbunden. Dies erfolgt insbesondere dadurch, dass das Überlaufbecken einen Beckenboden aufweist mit einer Beckenbodenöffnung, die in bevorzugter Ausführungsform dem als Ringspalt ausgebildeten Kapillarkanal entspricht. Somit ist der Kapillarkanal über diese Beckenbodenöffnung mit dem Überlaufbecken verbunden. Das abzuführende Immersionsmedium fließt bei dieser Ausführungsform beispielsweise als einzelner Tropfen zunächst in das Überlaufbecken und wird von diesem mit Hilfe der in dem Kapillarkanal herrschenden Kapillarkräfte weiter abgeführt.

In besonders bevorzugter Ausführungsform weist die Vorrichtung zur Untersuchung chemischer und/ oder biologischer Proben ferner eine Zuführeinrichtung mit einem Zuführrohr auf, wobei eine Austrittsöffnung des Zuführrohrs derart nahe an der Austrittslinse des Objektivs angeordnet ist, dass eine Zufuhr von Immersionsmedium in den Spalt zumindest teilweise mit Hilfe von Kapillarkräften erfolgt. Das Zuführrohr ist dabei insbesondere wie in WO 02/093232 ausgebildet. Durch diese Maßnahme kann eine automatische Zuführung von Immersionsmedium in den Spalt bewerkstelligt werden. Im Zusammenspiel mit dem Kapillarkanal erfolgt gleichzeitig eine automatische Abfuhr des Immersionsmediums, so dass ein kontinuierlicher Austausch des Immersionsmediums, beispielsweise zu Aufbereitungs- und/ oder Reinigungszwecken, sichergestellt werden kann. Ferner kann auf ein zeitaufwändiges Zuführen von Immersionsmedium durch Pipettieren verzichtet werden.

Alternativ zum Zuführrohr kann Immersionsmedium auch über den Kapillarkanal selbst zugeführt werden. Bei dieser Ausführungsform ist der Kapillarkanal nicht mit dem Überlaufbecken verbunden, sondern weist eine Kapillarkanalöffnung auf, die derart nahe an der Austrittslinse angeordnet ist, dass eine Zufuhr von Immersionsmedium in den Spalt zumindest teilweise mit Hilfe von Kapillarkräften erfolgt. Ferner ist der Kapillarkanal mit einem Ventil, insbesondere einem 3/2-Wege-Ventil, verbunden, über das der Kapillarkanal sowohl mit der Absaugeinrichtung als auch mit der Zuführeinrichtung verbunden ist. Im Gegensatz zu der Ausführungsform mit dem Zuführrohr erfolgt der Austausch des Immersionsmediums nicht kontinuierlich, sondern diskontinuierlich. D.h. in einem Arbeitsschritt wird Immersionsmedium zugeführt und nach einem Schaltvorgang des Ventils in einem weiteren Arbeitsschritt Immersionsmedium wieder abgeführt oder anders herum.

Die Erfindung betrifft ferner ein Verfahren zur Untersuchung chemischer und/oder biologischer Proben, insbesondere mit Hilfe einer wie vorstehend beschriebenen Vorrichtung. Bei dem erfindungsgemäßen Verfahren wird eine Austrittslinse eines Objektivs einem Probenträger gegenüberliegend angeordnet, um durch eine Probenträgerwand hindurch die Probe zu beobachten. Zwischen einer Außenfläche der Probenträgerwand und der Austrittslinse des Objektivs wird ein Spalt ausgebildet, derart, dass in dem Spalt z.B. mit Hilfe von Kapillarkräften ein Film aus einem Immersionsmedium angeordnet wird. Der Film ist dabei sowohl mit der Außenfläche der Probenträgerwand als auch mit der Austrittslinse des Objektivs in Kontakt. Erfindungsgemäß wird über einen in einer das Objektiv umgebenden Schutzeinrichtung ausgebildeten Kapillarkanal das Immersionsmedium automatisch, zumindest unterstützt durch Kapillarkräfte, abgeführt. Zum verbesserten Abführen des Immersionsmediums wird insbesondere in dem Kapillarkanal mit Hilfe einer Absaugeinrichtung ein schwaches Vakuum erzeugt. Hierbei weist die Schutzeinrichtung einen im Wesentlichen als Ringspalt ausgebildeten Kapillarkanal auf, der die Austrittslinse umgibt oder es sind mehrere Kapillarkanäle vorgesehen, deren Eingangsöffnungen ringförmig um die Austrittslinse herum angeordnet sind.

In bevorzugter Ausführungsform wird das Immersionsmedium automatisch zumindest teilweise mit Hilfe von Kapillarkräften zugeführt. Besonders bevorzugt erfolgt die Abfuhr des Immersionsmediums derart, dass das Volumen des Films aus Immersionsmedium im Wesentlichen konstant bleibt. Der abgeführte Volumenstrom wird dabei im Wesentlichen entsprechend zum zugeführten Volumenstrom eingestellt. Die Abfuhrmenge des Immersionsmediums kann konstruktiv, beispielsweise durch eine entsprechende Dimensionierung des Kapillarkanals, eingestellt werden. Ferner kann die Abfuhrmenge des Immersionsmediums durch Variation eines anliegenden Unterdrucks angepasst werden. Dies erfolgt insbesondere automatisch mit Hilfe einer entsprechenden Regeleinrichtung, die insbesondere die Größe des Films aus Immersionsmedium in dem Spalt zwischen Austrittslinse und Probenträgerwand detektiert.

Die Erfindung betrifft ferner einen Objektivaufsatz zum Schutz eines Objektivs, das insbesondere Teil der erfindungsgemäßen Vorrichtung ist, vor Verschmutzung durch ein Immersionsmedium. Hierzu weist der Objektivaufsatz ein inneres Kragenteil zum Aufsetzen auf das Objektiv auf. Darüber hinaus weist der Objektivaufsatz ein äußeres Kragenteil auf, das um das innere Kragenteil herum angeordnet ist. Das innere Kragenteil und das äußere Kragenteil sind zumindest teilweise derart beabstandet, dass ein im Wesentlichen ringförmiger Kapillarkanal ausgebildet ist. Das äußere Kragenteil weist eine Austrittsöffnung auf, über die der Kapillarkanal mit einer Absaugeinrichtung verbunden ist. Der Kapillarkanal ist als Ringspalt ausgebildet oder es sind mehrere Kapillarkanäle vorgesehen, deren Eingangsöffnungen ringförmig um die Austrittslinse herum angeordnet sind. Zusätzlich weist das äußere Kragenteil vorzugsweise ein Überlaufbecken zur Aufnahme des Immersionsmediums auf, wobei das Überlaufbecken einen Beckenboden mit einer Beckenbodenöffnung aufweist, über die der Kapillarkanal mit dem Überlaufbecken zur Abfuhr von Immersionsmedium verbunden ist. Dabei ist der Objektivaufsatz entsprechend der vorstehend beschriebenen Schutzeinrichtung der erfindungsgemäßen Vorrichtung, ausgebildet. Ferner ist der Objektivaufsatz geeignet, mit seiner Hilfe das erfindungsgemäße Verfahren durchzuführen.

Nachfolgend wird die Erfindung anhand bevorzugter Ausführungsformen unter Bezugnahme auf die anliegenden Zeichnungen näher erläutert.

Es zeigen:
- Fig. 1: eine schematische Seitenansicht einer ersten Ausführungsform der erfindungsgemäßen Vorrichtung,
- Fig. 2: eine perspektivische schematische Ansicht der in Fig. 1 dargestellten Vorrichtung,
- Fig. 3: eine schematische Schnittansicht eines erfindungsgemäßen Objektivaufsatzes,
- Fig. 4: eine schematische Schnittansicht einer weiteren Ausführungsform der erfindungsgemäßen Vorrichtung und
- Fig. 5: einen vergrößerten Teil der in Fig. 4 dargestellten Schutzeinrichtung.

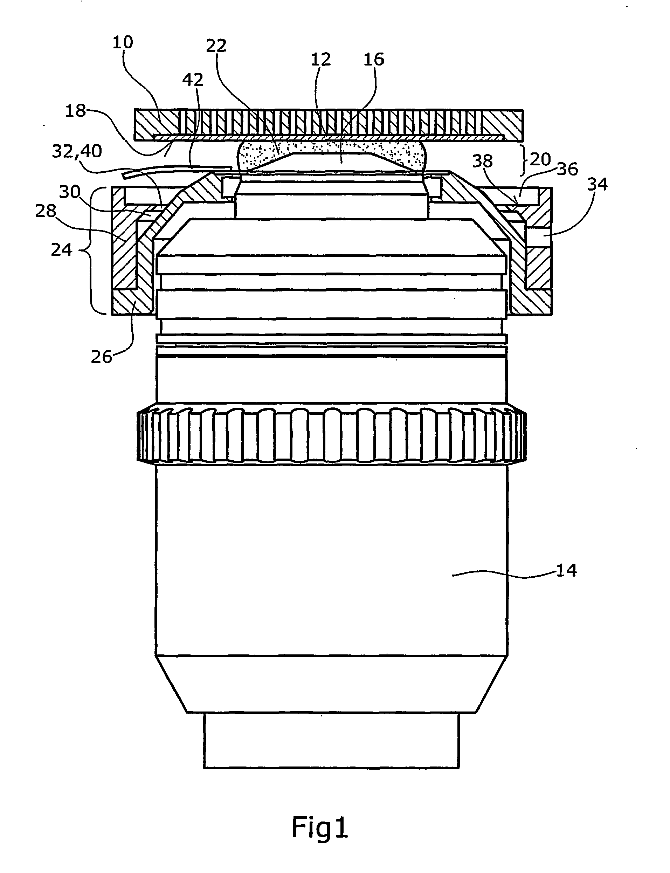

Die in Fig. 1 dargestellte erfindungsgemäße Vorrichtung zur Untersuchung chemischer und/ oder biologischer Proben weist einen Probenträger 10 zur Aufnahme der Proben auf. Der Probenträger 10 weist eine Probenträgerwand 12 auf, durch die hindurch ein Objektiv 14 eines nicht dargestellten konfokalen Mikroskops von unten die Proben untersuchen kann. Zwischen einer Austrittslinse 16 und einer Außenfläche 18 der Probenträgerwand 12 ist ein Spalt 20 ausgebildet, in den mit Hilfe von Kapillarkräften ein Film 22 aus einem Immersionsmedium vorgesehen ist. Der Film 22 ist sowohl mit der Außenfläche 18 als auch mit der Austrittslinse 16 in Kontakt.

Die Austrittslinse 16 ist von einer Schutzeinrichtung 24 umgeben, die eine Verschmutzung des Objektivs 14 durch das Immersionsmedium verhindert. Im dargestellten Ausführungsbeispiel ist die Schutzeinrichtung 24 als Objektivaufsatz ausgebildet. Das bedeutet, dass der Objektivaufsatz 24 auf das Objektiv 14 aufgesetzt werden kann. Die Schutzeinrichtung 24 weist ein inneres Kragenteil 26 und ein äußeres Kragenteil 28 auf. In einem Teilbereich sind das innere und das äußere Kragenteil 26, 28 zueinander beabstandet, so dass sich ein Kapillarkanal 30 ausbildet. Der Kapillarkanal weist eine Kapillarkanalöffnung 32 auf, über die das abzuführende Immersionsmedium in den Kapillarkanal 30 hineingesaugt werden kann. Der Kapillarkanal 30 ist über eine Austrittsöffnung 34, die in dem äußeren Kragenteil 28 vorgesehen ist, mit einer Absaugeinrichtung verbunden.

Das äußere Kragenteil 28 weist ferner ein Überlaufbecken 36 auf, das zusätzlich Immersionsmedium aufnehmen kann. Das Überlaufbecken 36 weist einen Beckenboden 38 mit einer Beckenbodenöffnung 40 auf. Im dargestellten Ausführungsbeispiel ist die Beckenbodenöffnung 40 mit der Kapillarkanalöffnung 32 identisch.

Die erfindungsgemäße Vorrichtung zur Untersuchung chemischer und/ oder biologischer Proben weist ferner ein Zuführrohr 42 auf, über das mit Hilfe von Kapillarkräften Immersionsmedium in den Spalt 20 zwischen Austrittslinse 16 und Probenträgerwand 12 zugeführt wird. Zu diesem Zweck ist das Zuführrohr 42 mit einer Zuführeinrichtung verbunden, die beispielsweise über den Kapillarkanal 30 zuvor abgeführtes Immersionsmedium, das anschließend gereinigt und ggf. aufbereitet wurde, wieder zuführt.

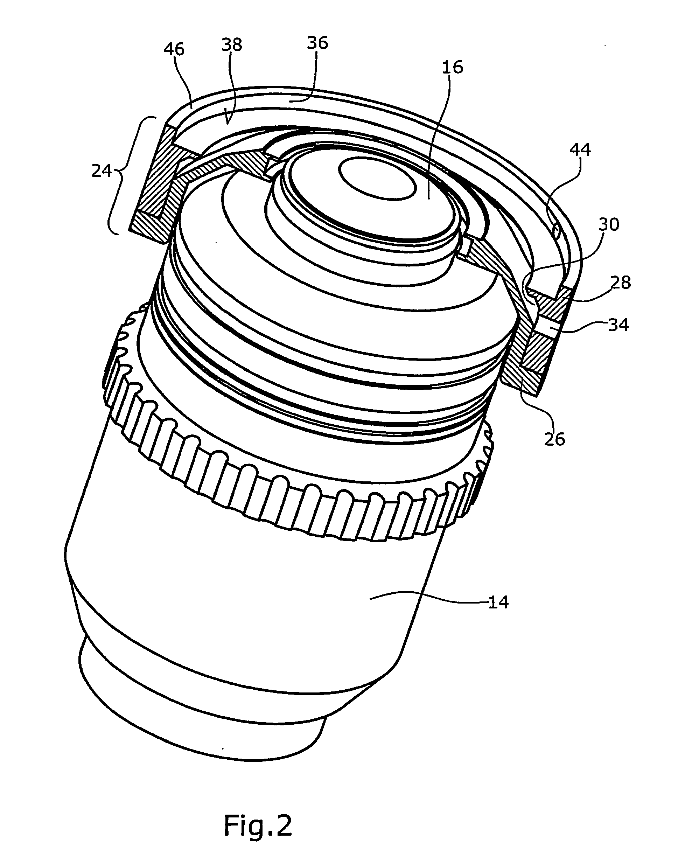

In Fig. 2 weist das Überlaufbecken 36 zusätzlich eine Öffnung 44 auf, über die das Zuführrohr 42 befestigt werden kann. Das Zuführrohr 42 ist dadurch in seiner Position relativ zum Objektiv 14 fixiert. Eine ggf. auftretende Federbewegung des Objektivs 44 führt somit nicht dazu, dass das Zuführrohr 42 aus seiner richtigen Lage heraus bewegt wird.

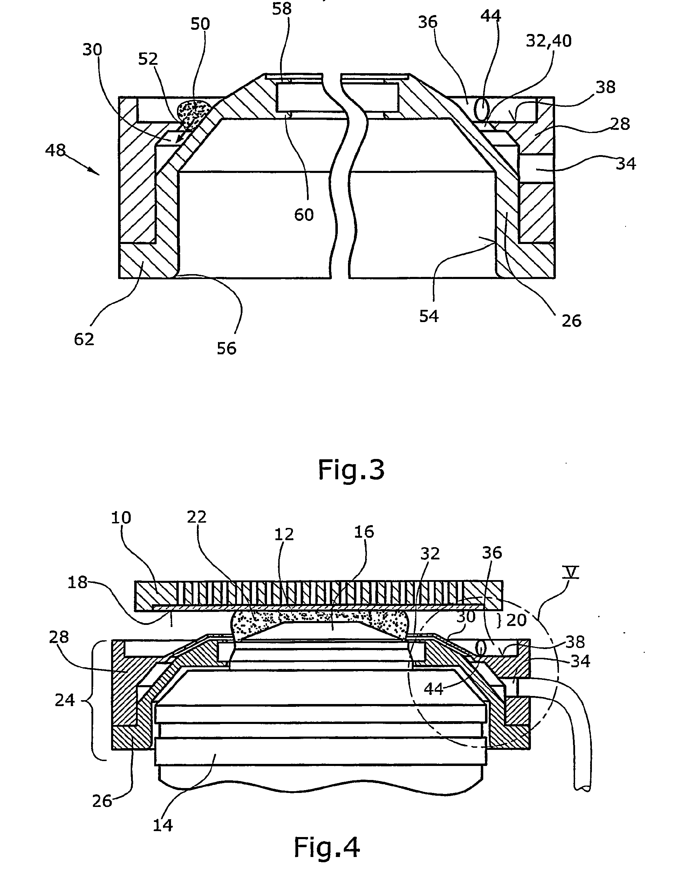

Fig. 3 zeigt einen erfindungsgemäßen Objektivaufsatz 48, der entsprechend der Schutzeinrichtung 24 aus Fig. 1 bzw. Fig. 2 ausgestaltet ist. Gleichwirkende Elemente des Objektivaufsatzes 48 sind mit gleichen Bezugszeichen versehen. In dem Überlaufbecken 36 ist ferner ein Tropfen 50 aus Immersionsmedium dargestellt, der oberhalb der Beckenbodenöffnung 40 bzw. der Kapillarkanalöffnung 32 angeordnet ist. Auf Grund der in dem Kapillarkanal 30 herrschenden Kapillarkräfte wird ein Teil 52 des Tropfens 50 in den Kapillarkanal 30 hineingesogen. Der Teil 52 wird auf Grund der Kapillarkräfte "aufgebrochen", so dass der Tropfen 50 in den Kapillarkanal 30 hinein ausläuft.

Das innere Kragenteil 26 des Objektivaufsatzes 48 weist eine Kontur 54 auf, die ein möglichst einfaches Aufsetzen auf ein Objektiv 14 ermöglicht. Ferner weist das innere Kragenteil 26 zwei Fortsätze 58, 60 auf, in die ein Dichtungsring eingesetzt werden kann. Dieser dient als Dichtung zwischen dem Objektiv 14 und dem inneren Kragenteil 26.

Das innere Kragenteil 26 weist ferner einen Absatz 62 auf, der als Anschlag das äußere Kragenteil 28 hält. Mit Hilfe des Absatzes 62 kann ein genau definierter Kapillarkanal 30 eingestellt werden, der durch Hinzufügen bzw. Entfernen nicht dargestellter ringförmiger Distanzelemente zusätzlich eingestellt werden kann.

Bei der in Fig. 4 dargestellten zweiten Ausführungsform der erfindungsgemäßen Vorrichtung zur Untersuchung chemischer und/ oder biologischer Proben sind gleichwirkende Elemente mit gleichen Bezugszeichen versehen. In dieser Ausführungsform weist das äußere Kragenteil 28 keine direkte Verbindung zwischen dem Überlaufbecken 36 und dem Kapillarkanal 30 auf. Die Kapillarkanalöffnung 32 befindet sich somit nicht in der Nähe des Überlaufbeckens 36, sondern in der Nähe des Films 22 aus Immersionsmedium. Ähnlich wie das Zuführrohr 42 bei der ersten Ausführungsform der erfindungsgemäßen Vorrichtung ist die Kapillarkanalöffnung 32 so nahe an der Austrittslinse 16 angeordnet, das eine Zufuhr von Immersionsmedium in den Spalt 20 zumindest teilweise mit Hilfe von Kapillarkräften erfolgt. Das bedeutet, dass der Kapillarkanal 30 sowohl zur Abfuhr als auch zur Zufuhr von Immersionsmedium verwendet wird. Zu diesem Zweck ist der Kapillarkanal 30 über die Austrittsöffnung 34 mit einem 3/2-Wege-Ventil verbunden, welches wiederum mit der Absaugeinrichtung und mit der Zuführeinrichtung verbunden ist. Auf ein Zuführrohr 42 kann in dieser Ausführungsform verzichtet werden.

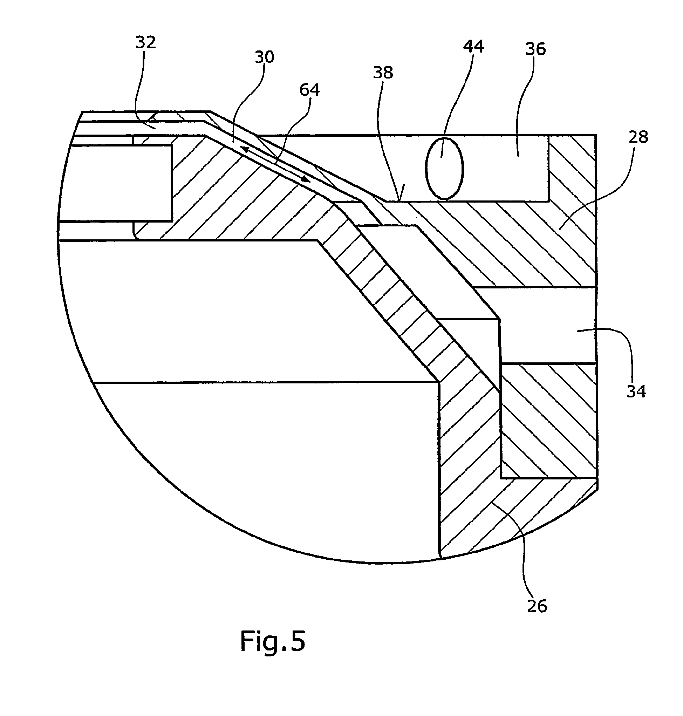

Entsprechend eines in Fig. 5 dargestellten Pfeils 64 wird der Kapillarkanal 30 also in zwei Richtungen durchströmt. Somit dient der Kapillarkanal 30 sowohl der Abfuhr von Immersionsmedium mit Hilfe von Kapillarkräften, als auch der Zufuhr von Immersionsmedium mit Hilfe von Kapillarkräften.

## Patentansprüche

1. Objektivaufsatz (24, 48) zum Schutz eines Objektivs (14), das eine Austrittslinse (16) aufweist, vor Verschmutzung durch ein Immersionsmedium, mit
einem inneren Kragenteil (26) zum Aufsetzen auf das Objektiv (14),
einem äußeren Kragenteil (28), das um das innere Kragenteil (26) herum angeordnet ist, wobei das innere Kragenteil (26) und das äußere Kragenteil (28) zumindest teilweise derart beabstandet sind, dass ein im Wesentlichen ringförmiger Kanal (30) ausgebildet ist und
einer in dem äußeren Kragenteil (28) angeordneten Austrittsöffnung (34), über die der Kanal (30) mit einer Absaugeinrichtung verbindbar ist,
**dadurch gekennzeichnet, dass**
der Kanal (30) als Kapillarkanal (30) ausgebildet ist, der im Wesentlichen als Ringspalt um die Austrittslinse (16) herum angeordnet ist, oder mehrere Kapillarkanäle vorgesehen sind, deren Eingangsöffnungen ringförmig um die Austrittslinse (16) herum angeordnet sind.

2. Objektivaufsatz nach Anspruch 1, **gekennzeichnet durch** ein in dem äußeren Kragenteil angeordnetes Überlaufbecken (36) zur Aufnahme des Immersionsmediums, wobei das Überlaufbecken (36) einen Beckenboden (38) mit einer Beckenbodenöffnung (40) aufweist, über die der Kapillarkanal (30) mit dem Überlaufbecken (36) zur Abfuhr von Immersionsmedium verbunden ist.

3. Objektivaufsatz nach Anspruch 1, **gekennzeichnet durch** ein Überlaufbecken (36) zur zusätzlichen Aufnahme von Immersionsmedium.

4. Objektivaufsatz nach Anspruch 3, **dadurch gekennzeichnet, dass** das Überlaufbecken (36) einen Beckenboden (38) mit einer Beckenbodenöffnung (40) aufweist, über die der Kapillarkanal (30) mit dem Überlaufbecken (36) verbunden ist.

5. Vorrichtung zur Untersuchung chemischer und/oder biologischer Proben, mit
einem Probenträger (10) zur Aufnahme der Proben,
einem Objektiv (14) zur Beobachtung der Proben durch eine Probenträgerwand (12), wobei zwischen einer Außenfläche (18) der Probenträgerwand (12) und einer Austrittslinse (16) des Objektivs (14) ein Spalt (20) ausgebildet ist,
einem in dem Spalt (20) derart vorsehbaren Film (22) aus einem Immersionsmedium, dass der Film sowohl mit der Außenfläche (18) der Probenträgerwand (12) als auch mit der Austrittslinse (16) des Objektivs (14) in Kontakt ist, und
einem die Austrittslinse (16) umgebenden Objektivaufsatz (24) nach einem der Ansprüche 1 bis 4, zum Schutz des Objektivs (14) vor Verschmutzung durch das Immersionsmedium.

6. Vorrichtung nach Anspruch 5, **gekennzeichnet durch** eine Zuführeinrichtung mit einem Zuführrohr (42), wobei eine Austrittsöffnung des Zuführrohrs (42) derart nah an der Austrittslinse (16) des Objektivs (14) angeordnet ist, dass eine Zufuhr von Immersionsmedium in den Spalt (20) zumindest teilweise mit Hilfe von Kapillarkräften erfolgt.

7. Vorrichtung nach einem der Ansprüche 5 oder 6, **dadurch gekennzeichnet, dass** der Kapillarkanal (30) zur Zufuhr von Immersionsmedium mit einer Zuführeinrichtung verbunden ist und der Kapillarkanal (30) eine Kapillarkanalöffnung (32) aufweist, die derart nah an der Austrittslinse (16) angeordnet ist, dass eine Zufuhr von Immersionsmedium in den Spalt (20) zumindest teilweise mit Hilfe von Kapillarkräften erfolgt.

8. Vorrichtung nach Anspruch 7, **dadurch gekennzeichnet, dass** der Kapillarkanal (30) mit einem Ventil, insbesondere einem 3/2-WegeVentil, verbunden ist, wobei das Ventil mit der Absaugeinrichtung und mit der Zuführeinrichtung verbunden ist.

9. Verfahren zur Untersuchung chemischer und/oder biologischer Proben, bei dem eine Austrittslinse (16) eines Objektivs (14) einem Probenträger (10) gegenüberliegend zur Beobachtung der Probe durch eine Probenträgerwand (12) angeordnet wird, wobei zwischen einer Außenfläche (18) der Probenträgerwand (12) und der Austrittslinse (16) des Objektivs (14) ein Spalt (20) ausgebildet wird, derart, dass in dem Spalt (20) ein Film (22) aus einem Immersionsmedium angeordnet wird, der sowohl mit der Außenfläche (18) der Probenträgerwand (12) als auch mit der Austrittslinse (16) des Objektivs (14) in Kontakt ist,
**dadurch gekennzeichnet, dass**
über den in einem das Objektiv (14) umgebenden Objektivaufsatz (24) gemäß einem der Ansprüche 1-8 ausgebildeten Kapillarkanal (30), der im Wesentlichen als Ringspalt um die Austrittslinse (16) herum angeordnet ist, oder über mehrere Kapillarkanäle, deren Eingangsöffnungen ringförmig um die Austrittslinse (16) herum angeordnet sind, das Immersionsmedium automatisch zumindest unterstützt durch Kapillarkräfte abgeführt wird.

10. Verfahren nach Anspruch 9, **dadurch gekennzeichnet, dass** das Immersionsmedium automatisch zumindest teilweise mit Hilfe von Kapillarkräften zugeführt wird.

11. Verfahren nach Anspruch 10, **dadurch gekennzeichnet, dass** die Abfuhr des Immersionsmediums relativ zur Zufuhr derart eingestellt wird, dass das Volumen des Films (22) aus Immersionsmedium im Wesentlichen konstant bleibt.

## Claims

1. An objective cap (24, 48) for protecting an objective (14) with an exit lens (16) from becoming fouled by an immersion medium, comprising
an inner collar portion (26) adapted to be placed onto the objective (14),
an outer collar portion (28) arranged around the inner collar portion (26), wherein the inner collar portion (26) and the outer collar portion (28) are at least partly spaced relative to each other such that an essentially annular channel (30) is defined, and
an outlet opening (34) provided in the outer collar portion (28), via which opening the channel (30) may be connected with a suction means,
**characterized in that**
the channel (30) is designed as a capillary channel (30) arranged substantially as an annular gap around the exit lens (16), or a plurality of capillary channels are provided, whose inlet openings are arranged annularly around the exit lens (16).

2. The objective cap according to claim 1, **characterized by** an overflow reservoir (36) arranged in the outer collar portion for receiving the immersion medium, wherein the overflow reservoir (36) comprises a reservoir bottom (38) having a reservoir bottom opening (40) via which the capillary channel (30) is connected with the overflow reservoir (36) for discharging immersion medium.

3. The objective cap according to claim 1, **characterized by** an overflow reservoir (36) for additionally receiving immersion medium.

4. The objective cap according to claim 3, **characterized in that** the overflow reservoir (36) comprises a reservoir bottom (38) having a reservoir bottom opening (40) via which the capillary channel (30) is connected with the overflow reservoir (36).

5. A device for examining chemical and/or biological samples, comprising
a sample carrier (10) for receiving the samples,
an objective (14) for observing the samples through a sample carrier wall (12), wherein a gap (20) is defined between an outer surface (18) of the sample carrier wall (12) and an exit lens (16) of the objective (14),
a film (22) of an immersion medium to be provided in the gap (20) such that the film is in contact with both the outer surface (18) of the sample carrier wall (12) and the exit lens (16) of the objective (14), and
an objective cap (24) according to one of claims 1 to 4, surrounding the exit lens (16) for preventing the objective (14) from becoming fouled by the immersion medium.

6. The device according to claim 5, **characterized by** a supply means comprising a supply line (42), wherein an outlet opening of the supply line (42) is arranged that near the exit lens (16) of the objective (14) that immersion medium is supplied into the gap (20) at least partly with the aid of capillary forces.

7. The device according to one of claims 5 or 6, **characterized in that** the capillary channel (30) is connected with a supply means for supplying immersion medium, and the capillary channel (30) comprises a capillary channel opening (32) which is arranged that near the exit lens (16) that immersion medium is supplied into the gap (20) at least partly with the aid of capillary forces.

8. The device according to claim 7, **characterized in that** the capillary channel (30) is connected with a valve, in particular a 3/2-way valve, wherein the valve is connected with the suction means and with the supply means.

9. A method for examining chemical and/or biological samples, wherein an exit lens (16) of an objective (14) is arranged opposite a sample carrier (10) for observing the sample through a sample carrier wall (12), wherein between an outer surface (18) of the sample carrier wall (12) and the exit lens (16) of the objective (14) a gap (20) is defined such that in the gap (20) a film (22) of an immersion medium is arranged which is in contact with both the outer surface (18) of the sample carrier wall (12) and the exit lens (16) of the objective (14),
**characterized in that**
via a capillary channel (30), defined in the objective cap (24) according to one of claims 1-8 surrounding the objective (14) and arranged substantially as an annular gap around the exit lens (16), or via a plurality of capillary channels, whose inlet openings are arranged annularly around the exit lens (16), the immersion medium is discharged automatically, at least with the aid of capillary forces.

10. The method according to claim 9, **characterized in that** the immersion medium is supplied automatically, at least partly with the aid of capillary forces.

11. The method according to claim 10, **characterized in that** the discharge of the immersion medium is adjusted relative to the supply such that the volume of the film (22) of immersion medium essentially remains constant.

## Revendications

1. Coiffe d'objectif (24, 48) servant la protection d'un objectif (14) comprenant une lentille de sortie (16) contre salissure par un médium d'immersion, comprenant
une collerette interne (26) à placer sur l'objectif (14),
une collerette externe (28) située autour de la collerette interne (26), la collerette interne (26) et la collerette externe (28) étant écartées, au moins partiellement, tel q'un conduit (30) sensiblement annulaire est formé, et
une ouverture de sortie (34) ménagée dans la collerette externe (28), par laquelle le conduit (30) peut être raccordé à un dispositif d'aspiration,
**caractérisée en ce que**
le conduit (30) est conçu comme un conduit capillaire (30), disposé sensiblement en forme d'un interstice annulaire autour de la lentille de sortie (16), ou que plusieurs conduits capillaires sont prévus, dont les ouvertures d'admission sont disposées de manière annulaire autour de la lentille de sortie (16).

2. Coiffe d'objectif selon la revendication 1, **caractérisée par** un réservoir de débordement (36) situé dans la collerette externe pour recevoir le médium d'immersion, le réservoir de débordement (36) comprenant un fond du réservoir (38) avec une ouverture de fond du réservoir (40) par laquelle le conduit capillaire (30) est relié au réservoir de débordement (36) pour décharger de médium d'immersion.

3. Coiffe d'objectif selon la revendication 1, **caractérisée par** un réservoir de débordement (36) pour recevoir en plus de médium d'immersion.

4. Coiffe d'objectif selon la revendication 3, **caractérisée en ce que** le réservoir de débordement (36) comprend un fond de réservoir (38) avec une ouverture de fond du réservoir (40) par laquelle le conduit capillaire (30) est relié au réservoir de débordement (36).

5. Dispositif pour l'analyse d'échantillons chimiques et/ou biologiques, comportant
un porte-échantillons (10) destiné à recevoir les échantillons,
un objectif (14) permettant d'observer les échantillons à travers une paroi (12) du porte-échantillons, un interstice (20) étant ménagé entre une surface extérieure (18) de la paroi (12) du porte-échantillons et une lentille de sortie (16) de l'objectif (14),
un film (22) d'un médium d'immersion apte à être prévu dans l'interstice (20) de sorte que le film est en contact avec la surface extérieure (18) de la paroi (12) du porte-échantillons et la lentille de sortie (16) de l'objectif (14), et
une coiffe d'objectif (24) selon une des revendications 1 à 4 autour de la lentille de sortie (16) servant la protection de l'objectif (14) contre salissure par le médium d'immersion.

6. Dispositif selon la revendication 5, **caractérisé par** un moyen d'amenée avec un tuyau d'amenée (42), une ouverture de sortie du tuyau d'amenée (42) étant disposée aussi près de la lentille de sortie (16) de l'objectif (14) que l'amenée de médium d'immersion dans l'interstice (20) est au moins partiellement effectuée à l'aide de forces capillaires.

7. Dispositif selon une des revendications 5 ou 6, **caractérisé en ce que** le conduit capillaire (30) est relié à un moyen d'amenée pour l'amenée de médium d'immersion et que le conduit capillaire (30) comprend une ouverture (32) du canal capillaire disposée aussi près de la lentille de sortie (16) que l'amenée de médium d'immersion dans l'interstice (20) est au moins partiellement effectuée à l'aide de forces capillaires.

8. Dispositif selon la revendication 7, **caractérisé en ce que** le conduit capillaire (30) est relié à un valve, particulièrement un valve à 3/2 voies, le valve étant relié au moyen d'aspiration et au moyen d'amenée.

9. Procédé D'analyse d'échantillons chimiques et/ou biologiques, dans lequel une lentille de sortie (16) d'un objectif (14) est disposée vis-à-vis d'un porte-échantillons (10) pour observation de l'échantillon à travers une paroi (12) du porte-échantillons, un interstice (20) étant formé entre une surface extérieure (18) de la paroi (12) du porte-échantillons et la lentille de sortie (16) de l'objectif (14), de sorte qu'un film (22) d'un médium d'immersion est disposé dans l'interstice (20), le film étant en contact avec la surface extérieure (18) de la paroi (12) du porte-échantillons et la lentille de sortie (16) de l'objectif (14),
**caractérisé en ce que**
le médium d'immersion est déchargé automatiquement au moins partiellement à l'aide de forces capillaires par un canal capillaire (30) sensiblement disposé en forme d'un interstice annulaire (20) autour de la lentille de sortie (16) et formé dans une coiffe d'objectif (24) selon une des revendications 1 à 8, entourant l'objectif (14), ou par plusieurs conduits capillaires, dont les ouvertures d'admission sont disposées de manière annulaire autour de la lentille de sortie (16).

10. Procédé selon la revendication 9, **caractérisé en ce que** le médium d'immersion est alimenté automatiquement au moins partiellement à l'aide de forces capillaires.

11. Procédé selon la revendication 10, **caractérisé en ce que** le déchargement du médium d'immersion est ajusté en rapport avec l'amenée de manière que le volume du film (22) de médium d'immersion reste sensiblement constant.
